Europäisches Patentamt

European Patent Office

Office européen des brevets

(19)

(11) Veröffentlichungsnummer: **0 271 880 B1**

(12) **EUROPÄISCHE PATENTSCHRIFT**

(45) Veröffentlichungstag der Patentschrift: **13.03.91**

(51) Int. Cl.5: **F16M 11/04**

(21) Anmeldenummer: **87118584.9**

(22) Anmeldetag: **15.12.87**

(54) **Stativ mit einer Säule und einem über ein Gelenk damit verbundenen Ausleger.**

(30) Priorität: **16.12.86 DE 3642956**

(43) Veröffentlichungstag der Anmeldung:
**22.06.88 Patentblatt 88/25**

(45) Bekanntmachung des Hinweises auf die
Patenterteilung:
**13.03.91 Patentblatt 91/11**

(84) Benannte Vertragsstaaten:
**AT CH DE ES FR GB IT LI**

(56) Entgegenhaltungen:
**EP-A- 0 058 540**
**DE-U- 8 436 137**
**FR-A- 2 268 438**
**FR-A- 2 501 496**
**US-A- 4 158 489**

(73) Patentinhaber: **Friedhelm Kreuzer GmbH**
**Benzstrasse 26**
**W-8039 Puchheim(DE)**

(72) Erfinder: **Kandler, Georg**
**Wildweg 1**
**W-8034 Germering(DE)**

(74) Vertreter: **Prüfer, Lutz H., Dipl.-Phys.**
**Harthauser Strasse 25d**
**W-8000 München 90(DE)**

Rank Xerox (UK) Business Services

## Beschreibung

Die Erfindung betrifft ein Stativ nach dem Oberbegriff des Patentanspruches 1.

Ein derartiges Stativ ist aus der DE-U- 84 36 137 bekannt. Bei diesem Stativ sind eine Druckfeder und eine mit deren Kolben verbundene Bremseinrichtung in dem Hohlraum angeordnet. Versorgungsleitungen werden in zusätzlich angeordneten und gegebenenfalls von außen zugänglichen Hohlräumen geführt. Zum Austauschen bzw. Warten der Druckfeder oder Bremseinrichtung ist es erforderlich, Stativarm und Gelenk voneinander zu trennen und Bremse und Druckfeder aus dem Hohlraum herauszunehmen, damit diese für die Wartung bzw. den Austausch zugänglich sind.

Außerdem ist zur Verbindung der Druckfeder mit dem anderen Parallelogrammarm eine spezielle Gelenkstange erforderlich, um den Abstand zwischen beiden Armen zu überbrücken.

Diesen Nachteil weist auch der Gelenkarm nach der US-A-4 158 489 auf, bei dem ein Parallelogrammarm als hohles Gußteil ausgebildet ist, an das die Gelenkstange angeformt ist. Dieses zusätzliche Teil liegt außerdem der Durchführung von Versorgungsleitungen im Wege.

Aufgabe der Erfindung ist es, obige Nachteile zu vermeiden. Insbesondere soll das Stativ so ausgebildet sein, daß einerseits Versorgungsleitungen im Kanal geführt und geschützt sind und andererseits aber Wartungsarbeiten an der Druckfeder bzw. der Bremseinrichtung oder ein Austausch derselben ohne Abbau von Stativarm und Gelenk durchführbar sind.

Diese Aufgabe wird durch ein Stativ der eingangs beschriebenen Art gelöst, welches dadurch gekennzeichnet ist, daß ein Widerlager für die Druckfeder mit der Außenseite des Stativarmes und das andere mit dem beweglichen Teil derart verbunden ist, daß die Druckfeder außerhalb des Hohlraumes angeordnet ist. Auf diese Weise ist die Druckfeder ohne Demontage zugänglich.

Eine Weiterbildung der Erfindung ist dadurch gekennzeichnet, daß Stativarm und bewegliches Teil so über ein die Relativbewegung der beiden bei Verschwenken des Auslegers bremsende Bremseinrichtung miteinander verbunden sind, daß die Bremseinrichtung ein den Hohlraum des Stativarms umgebendes Teil aufweist. Dadurch ist die Bremseinrichtung zugänglich, ohne daß eine Demontage erforderlich ist.

Gcmäß einer anderen Weiterbildung sind Gasdruckfedern in zwei Widerlagern gelagert, von denen eines mit dem Stativarm und das andere mit dem beweglichen Teil fest verbunden sind. Es wird eine kraftschlüssige Verriegelung zwischen dem Ausleger und der Säule in einer Winkelstellung erreicht, in der die Gasdruckfeder im wesentlichen entspannt ist. Dadurch ist es möglich, die Gasdruckfeder ohne Verletzungsgefahr gegen eine andere Gasdruckfeder auszutauschen.

Weitere Merkmale und 7weckmäßigkeiten der Erfindung ergeben sich aus der Beschreibung eines Ausführungsbeispieles anhand der Figuren. Von den Figuren zeigen:

Fig. 1 eine Seitenansicht des Statives mit abgeschnittener äußerer Abdeckung und

Fig. 2 einen Schnitt entlang der Linie 11-I1 in Fig. in vergrößertem Maßstab.

Das Stativ 1 umfaßt eine Säule 2 und einen damit gelenkig verbundenen Ausleger 3 sowie eine damit gelenkig verbundene Stativkopfsäule 4.

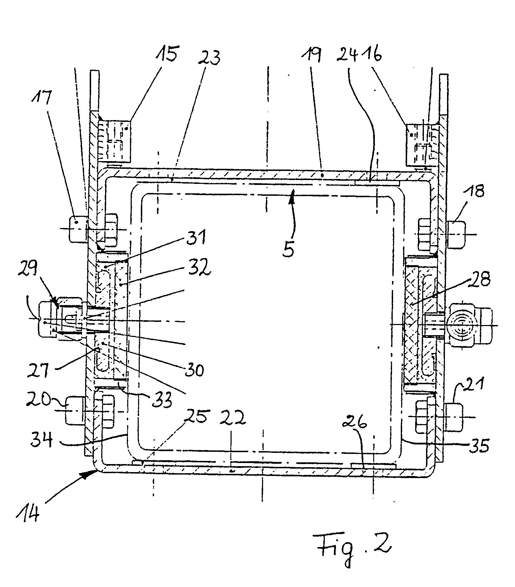

Der Ausleger 3 umfaßt einen Stativarm 5. Dieser ist über eine fest mit ihm verbundene Gabel 6 und eine Achse 7 mit der Säule 2 schwenkbar verbunden. Wie am besten aus Fig. 2 ersichtlich ist, ist der Stativarm 5 als ein langgestrecktes Rohr mit im wesentlichen quadratischem Querschnitt ausgebildet. Oberhalb der Deckseite des Stativarmes ist eine relativ zu dem Stativarm bewegliche Parallelstange 8 vorgesehen. Diese ist an ihrem der Säule zugewandten Ende über eine Achse 9 mit der Säule 2 schwenkbar verbunden. Die Parallelstange 8 direkt und der Stativarm 5 über an beiden Seitenwänden 34, 35 des Rohres an auf der der Säule 2 abgewandten Endseite angeschweißte Gabelstücke 10 sind an ihren der Säule 2 abgewandten Endseiten über jeweils ein Schenkelteil 11 und jeweilige Achsen 12, 13 miteinander verbunden. Der Ort der Achsen 7, 9, 12 und 13 ist so gewählt, daß sie die Eckpunkte eines Parallelogrammes bilden.

Um den Stativarm herum ist ein rahmenförmiges Teil 14 vorgesehen. Dieses ist symmetrisch aufgebaut und weist zwei Seitenteile 15, 16, ein mit diesem durch Schrauben 17, 18 verbundenes Deckelteil 19 und ein ebenfalls mittels Schrauben 20, 21 verbundenes Bodenteil 22 auf. Zwischen Deckelteil 19 und Bodenteil 22 einerseits und den jeweils angrenzenden Wänden des Stativarmes 5 sind Gleiter 23 bis 26 so vorgesehen, daß das Teil 14 mit geringstmöglicher Reibung auf dem Stativarm 5 gleitet.

Wie am besten aus Fig. 2 ersichtlich ist, sind auf der Innenseite der beiden Seitenteile 15, 16 fluidmittelbetätigbare Bremsen 27, 28 vorgesehen. Jede der Bremsen weist eine mit einer nichtgezeigten Fluidmittelleitung verbindbare Kolben-Zylinder-Einrichtung 29 auf. An der Kolben-Zylinder-Einrichtung ist jeweils ein Bremskolben 30 vorgesehen. Dieser ist von einer Manschette 31 umgeben. Auf der Manschette 31 liegt ein Bremsbelag 32 auf.

Bremskolben, Manschette und Bremsbelag sind in einer zylinderförmigen Fassung 33 gelagert. Die Bremsen liegen mit dem jeweiligen Bremsbelag 32 an den angrenzenden Seitenwänden 34, 35 des Stativarmes 5 an. Liegt kein Fluidmitteldruck an, wird von den Bremsen kein Druck auf die Seitenwände 34, 35 ausgeübt, so daß die Gleitbewegung zwischen Teil 14 und Stativarm nicht behindert wird. Liegt Fluidmitteldruck an, so werden die Bremsbeläge symmetrisch auf die Seitenwände 34, 35 gedrückt und bremsen bzw. verhindern eine Relativbewegung zwischen dem Teil 14 und dem Stativarm 5.

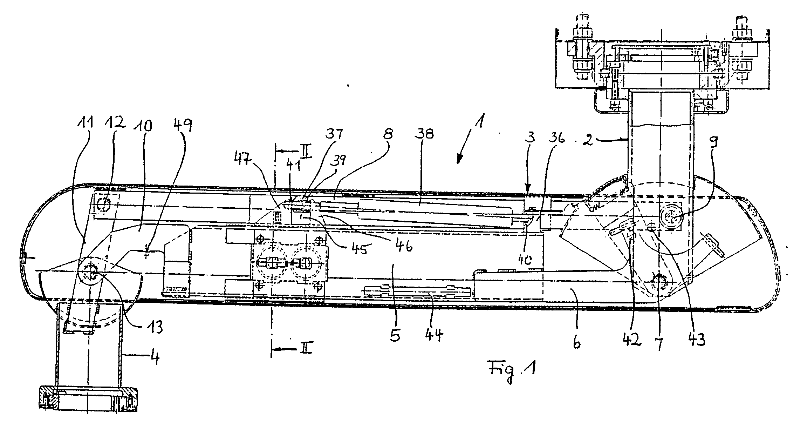

Wie aus Fig. 1 ersichtlich ist, ist zur Aufnahme einer Feder, die in dem Ausführungsbeispiel eine Gasdruckfeder 38 ist, ein erstes Widerlager 40 mit dem Stativarm 5 und in einem in Längsrichtung des Auslegers sich erstreckenden Abstand davon ein weiteres, mit der Parallelstange 8 fest verbundenes Widerlager 37 vorgesehen. Die Widerlager sind so angeordnet, daß die in ihnen aufgenommene Gasdruckfeder 38 einen Ausgleich für die von dem Stativ getragene Masse bewirkt. Die Widerlager weisen einander zugewandte Bohrungen 39, 40 auf, die jeweils so ausgebildet sind, daß die Gasdruckfeder 38 mit ihren in die Bohrung einzusetzenden freien Enden ein um die Achse der Bohrung erstreckendes Winkelspiel aufweisen, damit die Gasdruckfeder 38 beim Verschwenken des Auslegers der Bewegung des Parallelogrammes folgen kann.

Das Widerlager 37 weist auf seiner dem Widerlager 40 abgewandten Seite der Bohrung 39 ein Innengewinde auf, in welches eine Schraube 41 so eingesetzt ist, daß sie die Gasdruckfeder 38 in ihrer Position zwischen den beiden Widerlagern hält.

Wie aus Fig. 1 ersichtlich ist, weist die Gabel 6 in einem Abstand von der Achse 7 eine Bohrung 42 auf. Auf dem von der Mitte der Achse 7 aus gesehen gleichen Radius ist ferner eine entsprechende Bohrung 43 in der Säule 2 vorgesehen. Die beiden Bohrungen 42, 43 sind so aufeinander abgestimmt, daß sie in der Winkelstellung des Auslegers 3 zur Säule 2 zur Deckung gelangen, in der die Gasdruckfeder 38 sich gerade in vollständig ausgefahrener entspannter bzw. in annähernd ausgefahrener und entspannter Stellung befindet. In dieser Stellung kann die bolzenartige Stativarmsperre 44 in die zur Deckung gebrachten Bohrungen 42, 43 eingesteckt werden, so daß der Ausleger 3 und die Säule 2 kraftschlüssig in ihrer Winkelstellung zueinander arretiert sind. Anschließend wird die Schraube 41 gelöst, so daß die Gasdruckfeder 38 aus den Widerlagern herausgenommen und durch eine andere Gasdruckfeder ersetzt werden kann. Nach dem Ersetzen wird die Schraube 41 wieder so weit eingeschraubt, daß die Gasdruckfeder zwischen den beiden Widerlagern gehalten wird, und anschließend kann durch Herausnehmen der Stativarmsperre 44 die Verriegelung gelöst werden.

Das Widerlager 37 ist als ein sich quer über das Deckelteil 19 erstreckender Bolzen ausgebildet. An diesem greifen die beiden Führungsteile 46, 47 an, so daß das rahmenförmige Teil 14 mit der Parallelstange 8 jeweils relativ zum Stativarm 5 hin- und herbewegt wird und daß andererseits die durch das Bremsen bewirkte Arretierung zwischen Parallelstange 8 und Stativarm 5 erreicht wird. Durch den Schlitz 45 wird ein höhenmäßiger Ausgleich durch die Bewegung des Parallelogrammes ermöglicht.

Die Versorgungsleitungen werden bei der beschriebenen Ausführungsform durch den Hohlzylinder der Säule 2, das Innere des Stativarmes 5 und den Hohlzylinder in der Stativkopfsäule 4 geführt, so daß eine Berührung mit der relativ dazu beweglichen Parallelstange 8 und der beweglichen Gasdruckfeder 38 sowie der Bremseinrichtung vermieden wird.

In dem oben beschriebenen Ausführungsbeispiel sind die Bremsen fluidmittelbetätigt. Gemäß einer anderen Ausführungsform ist es auch möglich, stattdessen elektromagnetisch betätigte Bremsen zu verwenden.

Wie aus Figur 1 ersichtlich ist, ist zwischen dem den Stativarm 5 bildenden Rohr und dem Eingang zur Stativkopfsäule 4 eine sich im wesentlichen parallel zur Achse 13 erstreckende Auflagefläche in Form eines Bolzens 49 vorgesehen. Dieser ist so angeordnet, daß er in Betriebsstellung des Statives einen solchen Abstand vom Boden des Auslegers 3 hat, daß die Versorgungsleitungen über den Bolzen 49 geführt werden können und über diesen so in die Stativkopfsäule 4 hineingelangen, daß sie nicht am oberen Rand der Stativkopfsäule bzw. am Ausgang vom Ausleger anliegen und beispielsweise durch Scheuern an diesen Rändern verletzt werden. Der Bolzen ist in geeigneter Weise an den Seitenwänden des Auslegers verschraubt bzw. befestigt.

In dem oben beschriebenen Ausführungsbeispiel ist eine Gasdruckfeder zum Massenausgleich vorgesehen. Es ist möglich, anstelle dieser Gasdruckfeder einen Linearantrieb in Form eines Elektromotors zu verwenden. Mit diesem kann einerseits durch eine entsprechende Regelung ein Massenausgleich und andererseits durch eine entsprechende Steuerung auch eine gesteuerte Schwenkbewegung des Auslegers erreicht werden. Der Linearmotor wird wie in dem gezeigten Ausführungsbeispiel an der Stelle der Gasdruckfeder oberhalb des Stativarmes 5 in dem durch die Seitenwände 15, 16 gebildeten Kanal angeordnet, so daß die einfache kompakte Bauform bei gleichzeitigem Schutz der Versorgungsleitungen erhalten bleibt.

## Ansprüche

1. Stativ mit einer Säule (2), einem über ein Gelenk damit verbundenen Ausleger zum Aufnehmen einer Last, der einen über eine erste Achse (7) mit der Säule (2) verbundenen Stativarm (5) und ein über eine gegen die erste Achse (7) versetzte zweite Achse (9) mit der Säule (2) verbundenes, relativ zum Stativarm (5) bewegliches Teil (8) aufweist, der Stativarm (5) und das Teil (8) über jeweilige Achsen (12, l3) parallelogrammartig miteinander verbunden sind, der Stativarm (5) einen sich in seiner Längsrichtung erstreckenden Hohlraum zur Durchführung von Versorgungsleitun gen aufweist und zum Massenausgleich eine Druckfederund (38) und zum Arretieren des Stativarms eine Bremseinrichtung (28-32)vorge-sehen ist, dadurch gekennzeichnet, daß die Druckfeder (38) außerhalb des Hohlraumes angeordnet ist und daß ein Widerlager (36) für die Druckfeder (38) mit der Außenseite des hohlen Stativarmes (5) und das andere (37) mit dem beweglichen Teil (8) verbunden ist.

2. Stativ nach Anspruch 1, dadurch gekennzeichnet, daß Stativarm (5) und bewegliches Teil (8) so über ein die Relativbewegung der beiden bei Verschwenken des Auslegers bremsende Bremseinrichtung miteinander verbunden sind, daß die Bremseinrichtung ein den Hohlraum des Stativarms (5) umgebendes Teil (14) aufweist.

3. Stativ nach Anspruch 2, dadurch gekennzeichnet, daß die Bremseinrichtung ein den Hohlraum des Stativarms (5) rahmenförmig umgebendes Teil (14) aufweist.

4. Stativ nach einem der Ansprüche 2 bis 3, dadurch gekennzeichnet, daß die Bremseinrichtung an einer äußeren Seitenwand des Stativarmes (5) angreift.

5. Stativ nach Anspruch 3 oder 4, dadurch gekennzeichnet, daß das rahmenförmige Teil einen Schlitz (45) aufweist, in den ein mit dem anderen Teil (8) verbundenes Widerlager (37) zum Ausgleich des Abstandes zwischen den beiden Teilen (5, 8) bei Bewegung des Parallelogrammes führbar ist.

6. Stativ nach einem der Anspsrüche 1 bis 5, dadurch gekennzeichnet, daß der Stativarm (5) einen rechteckigen bzw. quadratischen Querschnitt aufweist und daß auf einer der Wandflächen zum Massenausgleich Druckfedern (38) vorgesehen sind.

7. Stativ nach Anspruch 6, dadurch gekennzeichnet, daß die Druckfedern (38) als Gasdruckfedern ausgebildet sind.

8. Stativ nach Anspruch 7, dadurch gekennzeichnet, daß eines der Widerlager für die Gasdruckfeder mit dem Stativarm und das andere mit dem beweglichen Teil (8) fest verbunden sind und daß eine formschlüssige verriegelung (42,43,44,) zwischen dem Ausleger und der Säule in einer Winkelstellung, in der die Gasdruckfeder (38) im wesentli-chen entspannt ist, vorgesehen ist.

9. Stativ nach Anspruch 8, dadurch gekennzeichnet, daß eines der Widerlager so verstellbar ist, daß im verriegelten Zustand die Gasdruckfeder aus ihrer Halterung entnehmbar ist.

10. Stativ nach Anspruch 2, dadurch gekennzeichnet, daß die Bremseinrichtung eine elektromagnetisch betriebene Einrichtung zum Einwirken auf das jeweils andere Teil aufweist.

11. Stativ nach einem der Ansprüche 1 bis 10, dadurch gekennzeichnet, daß die Verbindung der Gelenkpunkte (12, l3) von Stativarm (5) und beweglichem Teil (8) über ein gesondertes Schenkelteil (11) erfolgt.

## Claims

1. A stand with a column (2), with a side arm connected thereto via a joint for taking up a load, which side arm has a stand arm (5) connected to the column (2) Via a first pin (7), and a part (8) movable relative to the stand arm (5), con-nected via the second pin (9), offset against the first pin (7), to the column (2), the stand arm (5) and the part (8) being inrerconnected via respective pins (12, 13) in the manner of a parallelogram, the stand arm (5) having a cavity extending along its longitudinal direction for the passing through of supply lines and provision being made for a compression spring (38) for counterbalancing purposes, and for a braking device (28, 32) for locking the stand arm in position, characterized in that the compression spring (38) is arranged outside the cavity and in that one bearing member (36) for the compression spring (38) is connected to the outside of the hollow stand arm (5), and the other (37), to the movable part (8).

2. A stand according to claim 1,
characterized in that the stand arm (5) and the movable part (8) are interconnected in such a way via a braking device, braking the relative movement of the two components when the side arm is swung out, that the braking device has a part (14) surrounding the cavity of the stand arm (5).

3. A stand according to claim 2,
characterized in that the braking device has a part (14) surrounding the cavity of the stand arm (5) in the form of a frame.

4. A stand according to one of claims 2 to 3,
characterized in that the braking device acts on an outer side wall of the stand arm (5).

5. A stand aocording to claim 3 or 4,
characterized in that the frame-shaped part has a slot (45) wherein a bearing (37) member cnn be guided which is connected to the other Part (8) for equalizing the distance between the two parts (5, 8) during movement of the parallelogram.

6. A stand according to one of claims 1 to 5,
characterized in that the stand arm (5) has a rectangular or square cross section snd in that provision is made for cormpression springs (38) on one of the wall surfaces for counterbalancing purposes.

7. A stand according to claim 6,
characterized in that the compression springs (38) are designed as pneumatic compression springs.

8. A stand according to claim 7,
characterized in that one of the bearing members for the pneumatic compression spring is fixedly connected to the stand arm and the other is fixedly connected to the movable part (8), and in that provision is made for a positive locking sys-tem (42, 43, 44) between the side arm and the column in an angular position, wherein the pneumatic compression spring (38) is substantially relaxed.

9. A stand according to claim 8,
characterized in that one of the bearing members is adjustable in such a way that in the locked state, the pneumatic compression spring can be taken out of its mounting.

10. A stand accordig to claim 2,
characterized in that the braking device has an electromag-netically actuated device for acting on the other respective component.

11. A stand according to claim 1 to 10,
characterized in that the articulation points (12, 13) Of the stand arm (5) and movable part (8) are connected via a Separate arm member (11).

## Revendications

1. Support comportant une colonne (2), un avant-bras assemblé à ce dernier au moyen d'une articulation et destiné à recevoir une charge, cet avant-bras présentant un bras de support (5) assemblé à la colonne (2) par un premier axe (7) et une pièce (8) assemblée à la colonne (2) par un deuxième axe (9) décalé par rapport au premier axe (7) et mobile par rapport audit bras de support (5), le bras de support (5) et la pièce (8) étant assemblés l'un à l'autre par leur axe respectif (12 et 13) de façon à former un parallélogramme, le bras de support (5) présentant une cavité s'étendant dans le sens de la longueur de ce dernier et destinée au passage de conduites d'alimentation, ainsi qu'un ressort à pression (38) destiné à l'équilibrage des masses et, en vue du blocage du bras de support, un dispositif de freinage (28-32), caractérisé en ce que le ressort de pression (38) est monté à l'extérieur de la cavité et en ce qu'une butée (36) pour le ressort de pression (38) est assemblée au côté extérieur du bras de support (5) creux et que l'autre butée (37) est assemblée à la pièce mobile (8).

2. Support selon la revendication 1, caractérisé en ce que le bras de support (5) et la pièce mobile sont assemblés l'un à l'autre, au moyen d'un dispositif de freinage, freinant, lors du pivotement de l'avant-bras, le mouvement de ces éléments l'un par rapport à l'autre, de telle manière, que le dispositif de freinage présente une pièce (14) enserrant la cavité du bras de support (5).

3. Support selon la revendication 2, caractérisé en ce que le dispositif de freinage présente une pièce (14) enserrant la cavité du bras de support (5) et ayant la forme d'un cadre.

4. Support selon l'une des revendications 2 à 3, caractérisé en ce que le dispositif de freinage saisit un côté extérieur du bras de support (5).

5. Support selon l'une des revendications 3 ou 4, caractérisé en ce que la pièce en forme de cadre comporte une fente (45) par laquelle il est possible d'introduire une butée (37) assemblée à l'autre pièce (8) afin d'équilibrer l'écartement entre les deux pièces (5,8) apparaissant lors du déplacement du parallélogramme.

6. Support selon l'une des revendications 1 à 5, caractérisé en ce que le bras de support (5) présente une section à angles droits ou carrée et en ce que des ressorts à pression (38) sont prévus sur l'une des parois latérales, dans un souci d'équilibrage des masses.

7. Support selon la revendication 6, caractérisé en ce que les ressorts à pression (38) sont conçus sous forme de ressorts à pression pneumatiques.

8. Support selon la revendication 7, caractérisé en ce que l'une des butées des ressorts à pression pneumatiques forme un assemblage fixe avec le bras de support et l'autre un assemblage fixe avec la pièce mobile (8) et en ce qu'un verrouillage lié aux formes (42,43,44) est prévu entre l'avant-bras et la colonne dans une position formant un angle, dans laquelle le ressort à pression pneumatique (38) est détendu pour l'essentiel.

9. Support selon la revendication 8, caractérisé en ce que l'une des butées peut être déplacée de façon telle que, dans la position verrouillée, il est possible de retirer le ressort à pression pneumatique de son support.

10. Support selon la revendication 2, caractérisé en ce que le dispositif de freinage comporte un dispositif à entrafnement électromagnétique destiné à agir sur l'autre pièce concernée.

11. Support selon l'une des revendications 1 à 10, caractérisé en ce que l'assemblage des points d'articulation (12,13) du bras de support (5) et de la pièce mobile (8) est réalisé au moyen d'un montant spécial (11).

Fig. 1

EP 0 271 880 B1

Fig. 2